# EUROPEAN PATENT APPLICATION

(11) **EP 1 003 270 A1**
(43) Date of publication of application: **24.05.2000**
(21) Application number: 99122805.7
(22) Date of filing: 16.11.1999
(51) Int. Cl.: H02K 29/08, H02K 11/00, G01P 3/487

(54) **Magnetic pole position detector and annular sheet with sheet-like magnets for a brushless DC motor**

(30) Priority: 19.11.1998 JP 32987898
(71) Applicant: Moriyama Kogyo Kabushiki Kaisha, Shizuoka-ken (JP)
(72) Inventor: Takano, Tadashi, c/o Moriyama Kogyo Kabushiki K., Shuuchi-gun, Shizuoka-ken (JP)
(74) Representative: Tiedtke, Harro, Dipl.-Ing.

(57) **Abstract**

To provide a magnetic pole position detector for an inner rotor type brushless DC motor having a rotor with permanent magnets, and a stator with armature coils, surrounding the outside circumference of said rotor, wherein said detector has excellent water-tight and air-tight properties, is capable of effecting size reduction, and suited to a power drive for mobile objects. In addition, to provide an annular sheet with sheet-like magnets for use with this detector.

The magnetic pole position detector comprises a magnet retainer ring fixed to the end face of a rotor so as to be positioned radially inside the coil ends of armature coils for retaining sheet-like magnets magnetized in the direction parallel to a rotary shaft at the same angular intervals as the permanent magnets on the rotor; and magnet sensors disposed facing, in the direction parallel to the rotary shaft, sheet-like magnets retained in the magnet retainer ring fixed to the stator for detecting the rotational angular position of the rotor.

## Description

This invention relates to a magnetic pole position detector for an inner rotor type brushless Dc motor, and an annular sheet with sheet-like magnets for use with the same.

The DC motor with brushes, whose brushes and commutators are moving continuously in sliding relation, not only produces a large noise, develops brush wear, and causes a further noise due to sparks on the sliding surface, but also requires regular maintenance and inspection. Therefore, the brushless DC motor has been introduced in which a permanent magnet field acts as a rotor and an armature is used as a stator, while electric current switching is performed by semi-conductor devices such as Hall elements instead of commutators and brushes.

This brushless DC motor has often been used for applications in office automation or factory automation, but less frequently for power drives of mobile objects such as motor-driven vehicles. The reason is that the use of conventional ferrite type permanent magnets causes increased size and weight of the motor, and the mobile objects require low voltages and large currents because of the use of ordinary batteries for power sources. However, as a result of recent successive development of high quality permanent magnets, application of such a type of motor to mobile objects has been contemplated and put into practical use in some areas.

When such a type of motor is used for mobile objects, it is necessary to improve its water-tight and air-tight properties. However, since the conventional motor is provided with magnetic pole position detecting means outside the case enclosing the rotor, a problem of lack of water-tight and air-tight properties remains.

In addition, in the conventional magnetic pole position detecting means, radially magnetized magnets are fixed to a disk rotating with the rotor in one body, and Hall elements are disposed close to the peripheral edges of the magnets. In this case, the disk retaining the permanent magnets is disposed away from the rotor in the longitudinal direction of the rotary shaft, outwardly of the coil ends (portions of armature coils protruding from the iron core in the longitudinal direction of the rotary shaft) of the armature coils of the stator in the longitudinal direction of the rotary shaft. Therefore, the Hall elements will be disposed outwardly of the coil ends of the armature coils in both the longitudinal and radial directions of the rotary shaft, raising a problem of larger-sized motor assembly.

In view of the foregoing, it is a first object of this invention to provide a magnetic pole position detector for a brushless DC motor with excellent water-tight and air-tight properties, capable of effecting size reduction, and suited to a power drive for mobile objects. In addition, it is a second object of this invention to provide an annular sheet with sheet-like magnets for use with this detector.

According to this invention, the first object can be achieved by a magnetic pole position detector for an inner rotor type brushless DC motor having a rotor with permanent magnets, and a stator with armature coils, surrounding the outside circumference of said rotor, wherein said magnetic pole position detector for a brushless DC motor comprises a magnet retainer ring fixed to the end face of said rotor so as to be positioned radially inside the coil ends of said armature coils for retaining sheet-like magnets magnetized in the direction parallel to a rotary shaft at the same angular intervals as the permanent magnets on said rotor; and magnet sensors disposed facing, in the direction parallel to the rotary shaft, sheet-like magnets retained in said magnet retainer ring fixed to said stator for detecting the rotational angular position of said rotor.

The magnet retainer ring has a diameter smaller than that of the rotor and is bonded fixedly to the end face of the rotor, therefore the magnet retainer ring can be disposed reasonably inside the coil ends of the armature coils without interference with iron core of the stator. The magnet retainer ring may be composed of a plastic annular member bonded, at one end face, to the end face of the rotor, and a thin plate-like annular sheet fixed to the other end face of the annular member, and sheet-like magnets are retained in the annular sheet.

The annular sheet may be made of a plastic sheet, and paste magnet may be filled in a plurality of recesses provided in the annular sheet at regular angular intervals and magnetized in the longitudinal direction of the rotary shaft. The paste magnet used here may be coated directly to the end face of the magnet retainer ring with a template or by printing, or instead of paste magnet, die-cut sheet-like magnets may be bonded at regular angular intervals. Hall elements are most preferable for magnetic sensors in terms of size reduction, but magnetic resistive elements may be used.

The second object can be achieved by an annular sheet with sheet-like magnets having a base material made of polyestel resin; sheet like magnets formed annularly at regular angular intervals on one side of the base material and made from acrylic resin mixed with Nd-Fe-B powdered magnet; a protector made of acrylic resin covering the surface of the sheet-like magnets; an acrylic adhesive resin layer coated on the other side of said base material; and a removable protective film bonded to the adhesive resin layer.

### Brief Description of the Drawings

Fig. 1 is a sectional side view showing an embodiment of this invention;
Fig. 2 is a right side view showing the disposition of the stator and the Hall elements;
Fig. 3 is a sectional side view of the rotor;
Fig. 4 is a right side view of the same;
Fig. 5 is a sectional view taken on line V-V of Fig. 3;
Fig. 6 is an exploded perspective view of the rotor;
Fig. 7 is a sectional view of the annular sheet;
Fig. 8 is a side view showing another embodiment of the rotor;
Fig. 9 is a left side view of the same; and
Fig. 10 is a sectional view taken on line X-X of Fig. 9.

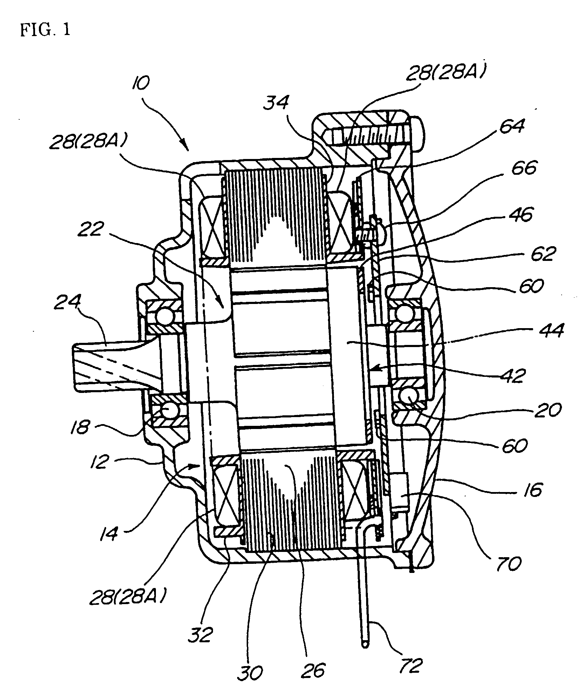

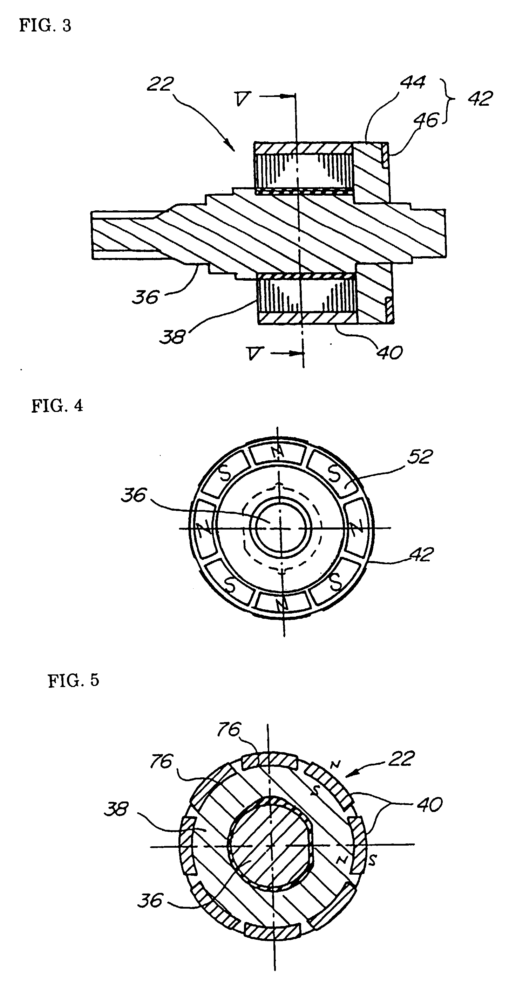

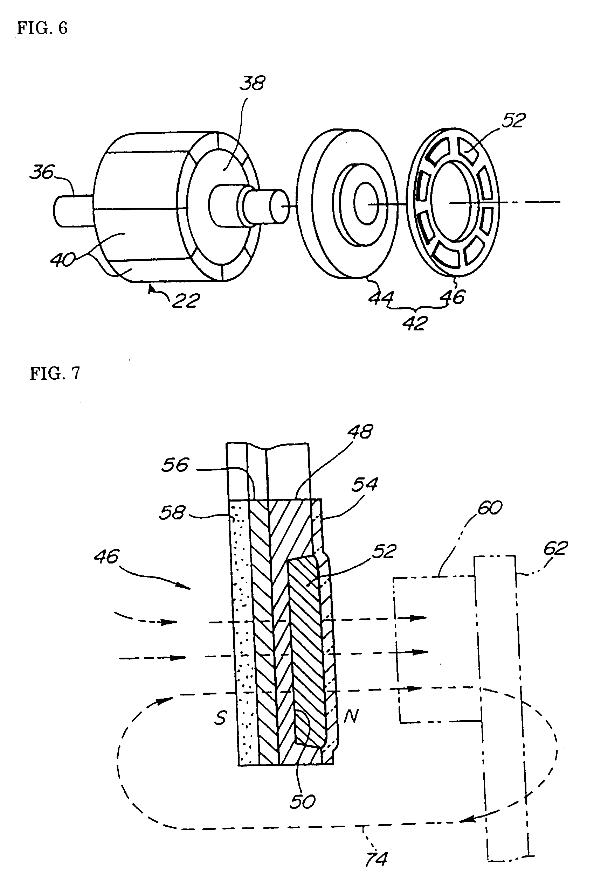

Fig. 1 is a sectional side view showing an embodiment of the brushless DC motor according to this invention, Fig. 2 a right side view showing the disposition of the stator and Hall elements, Fig. 3 a sectional side view of the rotor, Fig. 4 a right side view of the same, Fig. 5 a sectional view taken on line V-V of Fig. 3, Fig. 6 an exploded perspective view of the rotor, and Fig. 7 a sectional view showing the structure of the annular sheet.

In Figs. 1 and 2, numeral 10 designates a brushless DC motor of an inner rotor type, a three-phase alternating current synchronous motor. The motor 10 comprises a stator 14 fitted fixedly inside a case body 12, and a rotor 22 held for rotation on the case body 12 and a case lid 16 by bearings 18, 20. One end of the rotor 22 is protruded through the case body 12, which protruded end is used as a gear 24 for taking out motor output.

The stator 14 has nine field magnet iron cores 26 protruding radially inwardly as shown in Fig. 2, and an armature coil 28 (see Fig. 1) is wound around each of the iron cores. That is, these field magnet iron cores 26 are formed by an iron laminate 30 made of soft iron plates punched out in a given shape and piled up in one body, and arranged such that plastic plates 32, 34 as coil guide members are placed on each side of the laminate 30, claws formed in the plates 32, 34 are fitted in the iron cores, and then the armature coil 28 is wound around each of the iron cores 26. Both ends (coil ends) 28A of the armature coils 28 protrudes outwardly (in the longitudinal direction of the rotary shaft) from the laminate 30 (see Fig. 1). Nine armature coils 28 are divided into three groups, and three-phase alternating currents U, V, W are supplied to the respective groups to form a rotating magnetic field at the center of the stator 14.

The rotor 22, as shown in Figs. 3-6, comprises a rotary shaft 36, a yoke 38 fitted on and bonded fixedly to the rotary shaft 36, and eight permanent magnets 40 bonded fixedly on the outside circumference of the yoke 38. The yoke 38 is a laminate of punched soft iron plates, and can be made by utilizing the residual material left after the iron plates for the laminate 30 of the stator 14 are punched out. Neodymium type permanent magnets are the best for the rotor. The permanent magnets 40 are bonded fixedly to the yoke 38 in the state of non-magnetization and magnetized radially after fixing.

On one end of the rotor 22, that is, on one end of the yoke 38 is fixed a magnet retainer ring 42 for detecting the position of magnetic poles. The magnet retainer ring 42 is composed of a plastic annular member 44 and a thin plate-like annular sheet 46 bonded together, and its outside diameter is determined such that the retainer ring may be received radially inside the coil ends 28A of the armature coils 28. In this embodiment, the outside diameter of the magnet retainer ring 42 is a little smaller than that of the rotor 22. The annular member 44 is bonded, at the opposite end face from the annular sheet 46, to the yoke 38, and at the inside circumference, to the rotary shaft 36.

The annular sheet 46, as shown in Fig. 7, comprises a substrate 48 of polyester resin, nine sheet-like magnets 52 filled in recesses 50 formed circumferentially at regular intervals in one side of the substrate 48, a protector 54 of transparent acrylic resin covering the sheet-like magnets 52, an acrylic adhesive resin layer 56 coated on the other side of the substrate 48, and a removable protective film 58 bonded to the adhesive resin layer 56. This protective film 58 is removed when the annular sheet 46 is bonded to the annular member 44.

The sheet-like magnets 52 used here may be made by solidifying paste acrylic resin mixed with powdered or particulate magnet (paste magnet). For the magnetic material used here, for example, rare earth powdered magnet such as Nd-Fe-B (Neodymium-Fe-Boron) is suited. The magnets 52 are magnetized in the direction of the thickness (in the longitudinal direction of the rotary shaft 36) after solidification.

The annular sheet 46 may be supplied from a manufacturer, with the protective film 58 bonded, and the protective film 58 may be removed so as to bond the annular sheet to the annular member 44 when the motor 10 is assembled. At this time, the annular member 44 can be positioned automatically in the direction of rotation using attractive/repulsive force between the permanent magnets 40 of the rotor 22 and the sheet-like magnets 52 in the annular sheet 46.

Specifically, if the rotary shaft 36 of the rotor 22 is, for example, raised upright and the annular member 44 to which is bonded the annular sheet 46 is placed on the top of the rotor 22, the annular sheet 46 is attracted by the permanent magnets 40 at a given circumferential angular position and the annular member 44 is held there, as a result of the interaction between magnetic flux of the magnets 40 directed upwardly from the axial end face of the magnets and that of the sheet-like magnets 52 in the vertical direction (in the direction parallel to the rotary shaft 36). In this condition, after putting a positioning mark, the annular member 44 may be fixed with adhesive to the yoke 38 and rotary shaft 36.

Alternatively, after bonding the annular member 44 to the rotor 22 in advance, the annular sheet 46 with the protective film 58 may be positioned as described above, and after putting the positioning mark, the protective film 58 may be removed to bond the annular sheet 46 to the annular member 44. Also, if the annular sheet 46 is flexible enough and the protective film 58 is divided into a plurality of portions so as to be removable, the annular sheet may be bonded as follows. That is, after positioning the annular sheet 46 in the same manner as described above, the annular sheet may be pressed with a finger at one portion near the peripheral edge against the annular member 44 so as to prevent mis-alignment, while the other portion of the annular sheet 46 may be lifted up from the annular member 44 to remove a part of the protective film 58 for bonding. Then, the bonded portion may be pressed with a finger and the non-bonded portion may be lifted up from the annar member 44 to remove the remaining protective film 58.

In this way, the magnetic retainer ring 42 composed of the annular member 44 fixed to the rotor 22, and the annular sheet 46, is received radially inside the coil ends 28A of the armature coils 28, as shown in Fig. 1. The sheet-like magnets 52 of the annular sheet 46 are adapted to face, in the longitudinal direction of the rotary shaft 36, three Hall elements 60 as magnetic sensors for detecting rotational angular position of the rotor 22. Numeral 62 in Figs. 1 and 2 designates an annular sensor holder for holding these Hall elements 60.

The sensor holder 62 is secured with three screws 66 to the annular wiring plate 64 fitted fixedly on the plate 34 of the stator 14. Engaging holes 68 (Fig. 2) for the screws 66 are circumferentially elongated, allowing fixing position of the sensor holder 62 to be adjusted in the direction of rotation. The Hall elements 60 are of a surface-mounting type, surface-mounted to a printed circuit (not shown) formed on the sensor holder 62 to be connected to a connector 70, and connected to an external control device (not shown) through the connector 70. Also, on both sides of the wiring plate 62 are formed wiring circuits of the armature coils 28 by thick copper plates, and the coils 28 are connected to an external control circuit through three power lines 72.

In this embodiment, the magnet retainer ring 42 is received inside the coil ends 28A of the armature coils 28. In addition, since the sheet-like magnets 52 are magnetized in the direction of the thickness, that is, in the direction parallel to the rotary shaft 36, the Hall elements 60 can be disposed adjacent to and facing the magnets 52 in the direction parallel to the rotary shaft 36, as shown in Fig. 7, to facilitate passage of the magnetic flux 74 of the magnets 52 through the Hall elements 60. Thus, the Hall elements 60 do not interfere with the coil ends 28A of the armature coils 28, so that the sensor holder 62 can be disposed close to the coil ends 28A, providing size reduction of the motor 10 and especially of the dimension in the direction of the rotary shaft.

### Another embodiment

In the rotor 22 used in this embodiment, recesses 76 for receiving the permanent magnets 40 are formed in the punched soft iron plates themselves constituting the yoke 38 (see Fig. 5), and the permanent magnets 40 are positioned in the recesses 76. However, there can be various kinds of methods in positioning the permanent magnets 40. For example, the permanent magnets can be bonded fixedly to the yoke while held at regular intervals using a special jig for the magnets.

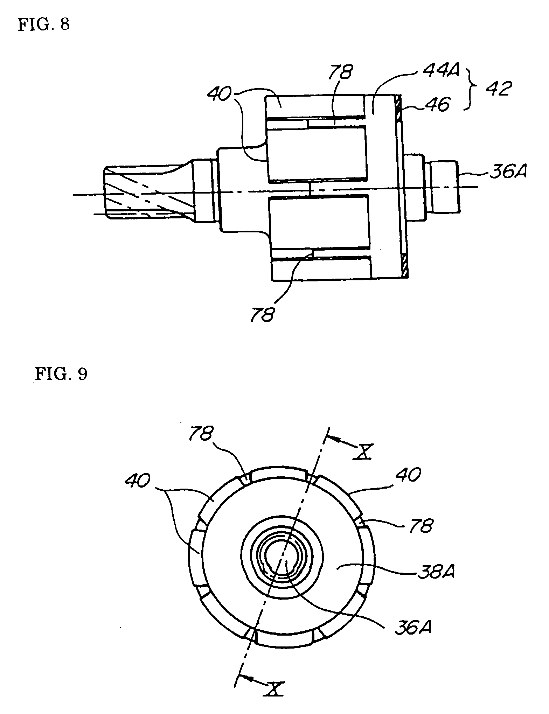

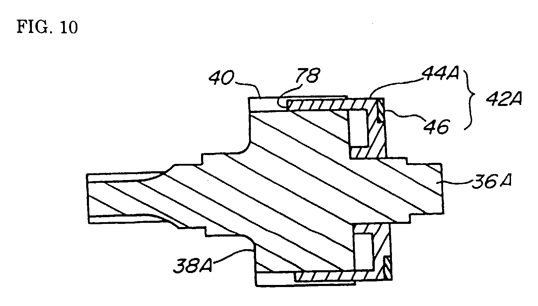

Figs. 8-10 show another embodiment of the rotor. Fig. 8 is a side view of the rotor, Fig. 9 a left side view of the same, and Fig. 10 a sectional view taken on line X-X of Fig. 9. The rotor 22 in this embodiment has a rotor 36A integrated with a yoke 38A. The outside circumference of the yoke 38A assumes a smooth surface. An annular member 44A of the magnet retainer ring 42A is formed with eight spacers 78 in one body extending along the outside circumference of the yoke 38A. Eight permanent magnets 40 are positioned at intervals partitioned by the spacers 78 and bonded fixedly to the yoke 38A.

In this way, the permanent magnets 40 are held in place at specified intervals by the spacers 78 of the annular member 44A, so that no special jig is needed. It is to be understood that the same annular sheet 46 as shown in Figs. 1-7 is available here.

In the embodiments described above, the magnet retainer ring 42 or 42A is arranged such that the annular member 44 or 44A and the annular sheet 46 are bonded in one body, but magnets corresponding to the magnets 52 may be fixed directly to the annular member 44 or 44A. For example, sheet-like magnets made from plate-like sintered alloy may be bonded. Also, if neodymium type magnet is used for the magnets 52 as in the foregoing embodiment, a magnetic field can be formed having magnetic flux of high density, so that space between the magnets and the Hall elements 60 can be set wider without need of assembling with high accuracy, providing easy assembly work of the motor.

According to the invention of claim 1 as described above, the magnet retainer ring fixed to the rotor for detecting the position of magnetic poles is received radially inside the coil ends of the armature coils, and sheet-like magnets retained in the magnet retainer ring are magnetized in the longitudinal direction of the rotary shaft, therefore magnetic sensors can be disposed facing the sheet-like magnets in the longitudinal direction of the rotary shaft. That is, the magnet retainer ring can be positioned radially inside the coil ends and the magnetic sensors are disposed without interference with the coil ends of the armature coils, so that the dimension of the motor is reduced in the direction of the rotary shaft by making effective use of the space inside the coil ends, providing size reduction of the motor. In addition, magnetic pole position detector composed of the magnet retainer ring and magnetic sensors can be enclosed inside the case, so that water-tight and air-tight properties of the motor are improved, thereby providing a suitable device not only for power drives of mobile objects, but also for other applications.

If the magnet retainer ring has a diameter smaller than that of the rotor and is bonded fixedly to the end face of the rotor, the magnet retainer ring can be advantageously received inside the coil ends of the armature coils without interference with the iron core of the stator (claim 2). The magnet retainer ring is composed of a plastic annular member and an annular sheet fixed to one end face of the annular member, and can be arranged such that sheet-like magnets are retained in the annular sheet (claim 3). In this case, if annular sheets with sheet-like magnets are prepared separately, annular sheets of the same kind can be adapted to different motors only by changing the annular members, providing easy design change.

Sheet-like magnets used here can be made from paste magnet mixed with powdered magnetic material, coated with a template or by printing and cured (claim 4). The annular sheet is a plastic sheet and formed with recesses at positions where the sheet-like magnets are to be retained, and the sheet-like magnets can be made from paste magnet mixed with powdered magnetic material, filled in the recesses and cured, and thereafter magnetized in the direction of the thickness (claim 5).

If magnetic sensors are constituted by Hall elements disposed adjacent to and facing, in the longitudinal direction of the rotary shaft, the sheet-like magnets retained in the magnet retainer ring, a further size reduction of the motor can be possible (claim 6), and surface-mounted type Hall elements are best suited especially for the sensors. According to the invention of claim 7, an annular sheet with sheet-like magnets can be achieved for use with a magnetic pole position detector for a brushless DC motor of claim 3 or 5.

To provide a magnetic pole position detector for an inner rotor type brushless DC motor having a rotor with permanent magnets, and a stator with armature coils, surrounding the outside circumference of said rotor, wherein said detector has excellent water-tight and air-tight properties, is capable of effecting size reduction, and suited to a power drive for mobile objects. In addition, to provide an annular sheet with sheet-like magnets for use with this detector.

The magnetic pole position detector comprises a magnet retainer ring fixed to the end face of a rotor so as to be positioned radially inside the coil ends of armature coils for retaining sheet-like magnets magnetized in the direction parallel to a rotary shaft at the same angular intervals as the permanent magnets on the rotor; and magnet sensors disposed facing, in the direction parallel to the rotary shaft, sheet-like magnets retained in the magnet retainer ring fixed to the stator for detecting the rotational angular position of the rotor.

To provide a magnetic pole position detector for an inner rotor type brushless DC motor having a rotor with permanent magnets, and a stator with armature coils, surrounding the outside circumference of said rotor, wherein said detector has excellent water-tight and air-tight properties, is capable of effecting size reduction, and suited to a power drive for mobile objects. In addition, to provide an annular sheet with sheet-like magnets for use with this detector.

The magnetic pole position detector comprises a magnet retainer ring fixed to the end face of a rotor so as to be positioned radially inside the coil ends of armature coils for retaining sheet-like magnets magnetized in the direction parallel to a rotary shaft at the same angular intervals as the permanent magnets on the rotor; and magnet sensors disposed facing, in the direction parallel to the rotary shaft, sheet-like magnets retained in the magnet retainer ring fixed to the stator for detecting the rotational angular position of the rotor.

## Claims

1. A magnetic pole position detector for an inner rotor type brushless DC motor having a rotor with permanent magnets, and a stator with armature coils, surrounding the outside circumference of said rotor, said magnetic pole position detector for a brushless DC motor
comprising:
a magnet retainer ring fixed to the end face of said rotor so as to be positioned radially inside the coil ends of said armature coils for retaining sheet-like magnets magnetized in the direction parallel to a rotary shaft at the same angular intervals as the permanent magnets on said rotor; and magnet sensors disposed facing, in the direction parallel to the rotary shaft, sheet-like magnets retained in said magnet retainer ring fixed to said stator for detecting the rotational angular position of said rotor.

2. The magnetic pole position detector for a brushless DC motor of claim 1, wherein the magnet retainer ring has a diameter smaller than that of the rotor and bonded fixedly to the end face of the rotor.

3. The magnetic pole position detector for a brushless DC motor of claim 1 or 2, wherein the magnet retainer ring is provided with a plastic annular member bonded fixedly to the end face of the rotor, and an annular sheet bonded, at one side, to the opposite end face of the annular member from the rotor and retaining, on the other side, said sheet-like magnets.

4. The magnetic pole position detector for a brushless DC motor of any of claims 1-3, wherein sheet-like magnets are of a sheet-like type made from paste magnet mixed with powdered magnetic material and coated on the end face of the magnet retainer ring.

5. The magnetic pole position detector for a brushless DC motor of claim 3, wherein the annular sheet is a plastic sheet, and the sheet-like magnets are made from paste magnet mixed with powdered magnetic material, filled in a plurality of recesses formed in the annular sheet at regular angular intervals and cured, and thereafter magnetized in the direction parallel to the rotary shaft.

6. The magnetic pole position detector for a brushless DC motor of any of claims 1-5, wherein the magnetic sensors are formed by Hall elements disposed adjacent to and facing, in the longitudinal direction of the rotary shaft, the sheet-like magnets retained in the magnet retainer ring.

7. An annular sheet with a sheet-like magnets for use with the magnetic pole position detector for a brushless DC motor of claim 3 or 5, said annular sheet with sheet-like magnets having:
a base material made of polyestel resin; sheet-like magnets formed at regular angular intervals on one side of the base material and made of acrylic resin mixed with Nd-Fe-B powdered magnet; a protector made of acrylic resin covering the surfaces of the sheet-like magnets; an acrylic adhesive resin layer coated on the other side of said base material; and a removable protective film bonded to the adhesive resin layer.
